# EUROPÄISCHE PATENTSCHRIFT

(11) **EP 1 118 214 B1**
(45) Veröffentlichungstag und Bekanntmachung des Hinweises auf die Patenterteilung: **20.03.2002**
(21) Anmeldenummer: 99969877.2
(22) Anmeldetag: 21.09.1999
(51) Int. Cl.: H04N 5/45, G06T 3/40

(54) **VERFAHREN ZUR BILDGRÖSSENÄNDERUNG VON VIDEOBILDERN**
METHOD FOR MODIFYING THE IMAGE SIZE OF VIDEO IMAGES
PROCEDE DE MODIFICATION DE LA GRANDEUR D'IMAGES VIDEO

(30) Priorität: 28.09.1998 DE 19844404
(43) Veröffentlichungstag der Anmeldung: 25.07.2001
(73) Patentinhaber: Infineon Technologies AG, 81669 München (DE); SIEMENS AKTIENGESELLSCHAFT, 80333 München (DE)
(72) Erfinder: BRETT, Maik, D-81539 München (DE); NIE, Xiaoning, D-81543 Munchen (DE); WENDEL, Dirk, D-82008 Unterhaching (DE)
(74) Vertreter: Banzer, Hans-Jörg, Dipl.-Ing.
(86) Internationale Anmeldenummer: DE9903010
(87) Internationale Veröffentlichungsnummer: WO0019715

(56) Entgegenhaltungen:
- EP-A- 0 513 516
- US-A- 4 656 515
- US-A- 4 908 874
- US-A- 4 991 010

## Beschreibung

Derartige Bildgrößenänderungen werden insbesondere für Bild-in-Bild-Einblendungen (picture in picture, PiP) benötigt, bei denen ein Kleinbild in ein Hauptbild eingeblendet wird. Hierzu wird die Bildgröße des Kleinbildes im Verhältnis zum Hauptbild reduziert. Dabei entsprechen sich bei bekannten Bildreduktionen die Reduktion in horizontaler Richtung und in vertikaler Richtung, sodaß sich Gesamtreduktionsfaktoren ergeben, die Kehrwerten quadratischer Zahlen entsprechen, wie 1/4, 1/9, 1/16, 1/36. Die so reduzierten Bildsignale werden zusammen mit den Bildsignalen des Hauptbilds zur Synchronisation in einen Bildspeicher eingelesen, in dem die über die Dauer einer Kleinbildzeile bzw des ganzen Kleinbildes anfallenden Pixel und Zeilen gespeichert werden, um die Bildgrößenveränderung zu erzielen.
Eine feinere Änderung des horizontalen Reduktionsfaktors ist z.B. durch eine Änderung der Auslesefrequenz des Bildspeichers möglich. Eine entsprechende Änderung des vertikalen Reduktionsfaktors ist jedoch nicht möglich, da die vertikale Frequenz durch den TV-Standard festgelegt ist.

Das Dokument US-A-4 908 874 beschreibt ein Verfahren zur Bildgrößenänderung von Videobildern, bei denen zuerst eine Dezimation von Videobildsignalen um einen ganzzahligen Dezimationsfaktor, und danach eine Feindezimation der Videobildsignale um einen auf uriganzzahlige Werte einstellbaren Feindezimationsfaktor vorgenommen wird.

Der Erfindung liegt die Aufgabe zugrunde, mit relativ geringem Aufwand und hoher Bildqualität bessere Einstellmöglichkeiten der Bildreduktion zu erreichen.

Diese Aufgabe wird durch ein Verfahren und eine Vorrichtung nach den Ansprüchen 1 und 13 gelöst. Die Unteransprüche beschreiben bevorzugte Weiterbildungen des erfindungsgemäßen Verfahrens.

Indem somit vor der Zwischenspeicherung in dem Bildspeicher die ganzzahlige Dezimation mit einer Feindezimation, mit der unganzzahlige Werte erfaßt werden können, kombiniert wird, kann ein großer Bereich von Dezimationsfaktoren erzielt werden. Indem die beiden Dezimationen nacheinander durchgeführt werden, kann eine Gesamtdezimation als Produkt dieser einzelnen Dezimationen erreicht werden.

Für die Feindezimation kann insbesondere ein kontinuierlicher oder quasikontinuierlicher Zahlenbereich wie zB von 1 bis 1,5 genommen werden. Er kann durch die Kombination mit der ganzzahligen Dezimation sinnvoll begrenzt werden, da durch eine Multiplikation nichtganzzahliger Werte mit ganzzahligen Werten ein großer Bereich nichtganzzahliger Werte abgedeckt werden kann. Hierzu kann insbesondere ein mehrere ganzzahlige Werte umfassender Bereich für den Gesamtdezimationsfaktor abgedeckt werden, indem die einstellbaren ganzzahligen Dezimationsfaktoren und Feindezimationsfaktoren entsprechend aufeinander abgestimmt werden, ohne daß dieser Bereich Lücken von nichteinstellbaren Werten aufweist.

Bei der Dezimation von mehreren Bildsignalen zu einem Bildsignal, bei dem aus mehreren Werten ein einziger Wert gebildet wird, wird allgemein ein entsprechendes Dezimationsfilter verwendet. Hierzu kann insbesondere ein Dezimationsfilter mit Tiefpaßwirkung verwendet werden, das somit eine integrierende und Rauschen unterdrückende Wirkung hat. Indem die ganzzahlige Dezimation der Feindezimation nachgeschaltet wird, kann diese Tiefpaßwirkung vorteilhafterweise für eine Rauschunterdrückung der Ausgangssignale der Feindezimation verwendet werden. Weiterhin kann auch vor beiden Dezimationen eine zusätzliche Tiefpaßfilterung durchgeführt werden; die durch den Tiefpaß oder die Tiefpässe bewirkte Abflachung der Signale kann durch eine nachfolgende Frequenzgangversteilerung kompensiert werden.

Die Feindezimation um nichtganzzahlige Werte kann dabei vorteilhafterweise durch eine lineare Interpolation von Videobildsignalen erreicht werden.

Die erfindungsgemäße Dezimation kann dabei sowohl zur horizontalen als auch zur vertikalen Dezimation der Videobildsignale eingesetzt werden. Insbesondere kann somit ein Verfahren zur feinstufigen oder stufenlosen Bildgrößenänderung geschaffen werden, bei dem die Variation in horizontaler und vertikaler Richtung unabhängig voneinander feinstufig vorgenommen werden kann.

Die Erfindung wird im folgenden anhand der beiliegenden Zeichnungen an einigen Ausführungsformen näher erläutert. Es zeigen:
Fig. 1 ein Blockdiagramm eines erfindungsgemäßen Verfahrens zur horizontalen und vertikalen Bildgrößenänderung;
Fig. 2 ein Blockdiagramm eines erfindungsgemäßen Verfahrens zur horizontalen Bildgrößenänderung;
Fig. 3 a,b Zeitdiagramme von Videobildsignalen zur Erläuterung der erfindungsgemäßen Feindezimation von Bildsignalen.
Fig. 4 ein Blockdiagramm eines erfindungsgemäßen Verfahrens zur vertikalen Bildgrößenänderung.
Das erfindungsgemäße Verfahren kann grundsätzlich für eine Bildgrößenänderung in vertikaler und/oder horizontaler Richtung verwendet werden

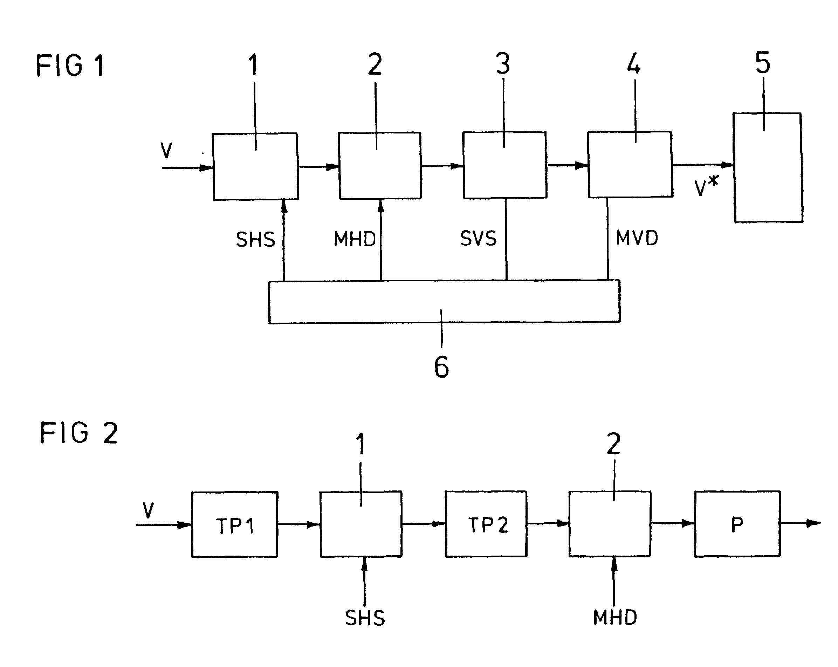

Bei einem Verfahren zur stufenlosen oder feinstufigen Bildgrößenänderung beider Richtungen gemäß Fig. 1 wird ein Videosignal V eines zu reduzierenden Kleinbildes nacheinander einer horizontalen und vertikalen Dezimation unterzogen und anschließend als horizontal und vertikal dezimiertes Videobildsignal V* in einen Bildspeicher 5 eingelesen, in dem es zusammen mit einem Hauptbild abgespeichert wird, sodaß anschließend ein überlagertes Videobild aus dem Bildspeicher 5 ausgelesen werden kann.

Das Videosignal V gelangt hierzu nacheinander in einem horizontalen Skalierer 1 für eine horizontale FeinDezimation, einen horizontalen Dezimationsfilter 2 für eine ganzzahlige horizontale Dezimation und Tiefpaßfilterung, einen vertikalen Skalierer 3 für eine vertikale FeinDezimation und einen vertikalen Dezimationsfilter 4 für eine ganzzahlige vertikale Dezimation und Tiefpaßfilterung. In die jeweiligen Skalierer 1,3 und Dezimationsfilter 2,4 werden von einer Steuereinrichtung 6 Steuersignale SHS, MHD, SVS, MVD eingegeben.

Die horizontale Dezimation erfolgt dabei vor der vertikalen Dezimation, da hierdurch der Speicheraufwand für die in der vertikalen Dezimation benötigten Zeilenverzögerungen um den Betrag der horizontalen Reduktion vermindert wird.

Das horizontale Dezimationsfilter 2 bewirkt eine Unterabtastung um einen ganzzahligen Dezimationsfaktor MHD. Hierfür kann grundsätzlich ein bekannter Dezimationsfilter verwendet werden, wie zB ein Dezimationsfilter mit Tiefpaßwirkung. Bei derartigen Dezimationsfiltern wird insbesondere auch die rauschunterdrückende sowie integrierende Wirkung der Tiefpaßfilter ausgenutzt. Es kann beispielsweise ein MTA-Kernfilter verwendet werden, das die Anpassung der Filtercharakteristik an verschiedene Dezimationsfaktoren erlaubt.

Der horizontale Skalierer 1 ermöglicht eine feinstufige oder stufenlose Dezimation des eingehenden Videosignals V des Kleinbildes um den Feindezimationsfaktor SHS. Diese Feinskalierung erfordert somit gegebenenfalls auch eine Dezimation um unganzzahlige Feindezimationsfaktoren SHS. Hierzu weist der horizontale Skalierer 1 ein Interpolationsfilter auf, das zeitvariant arbeitet und die zur Feinskalierung notwendigen Abtastwerte berechnet. Der Skalierer führt die für eine Abtastratenwandlung von einer Ausgangsabtastrate LHS zu einer Abtastrate MHS notwendige Umwandlung durch, beispielsweise als Oversampling um den Faktor LHS, Filterung und Unterabtastung um den Faktor MHS. Für den Fall, daß LHS<MHS ist, wird die gewünschte Reduktion der Pixelanzahl mit einer Verminderung der Abtastrate vorgenommen. Bei LHS>MHS wird die Pixelanzahl und Abtastrate erhöht. Dabei kann LHS festgehalten werden, da die Einstellung des Dezimationsfaktors für die Einstellung des Reduktionsfaktors genügt. Somit kann ein Faktor SHS gemäß der Gleichung MHS = LHS + SHS gebildet werden. Dementsprechend erfolt in jedem Fall eine Reduktion der Pixelanzahl.

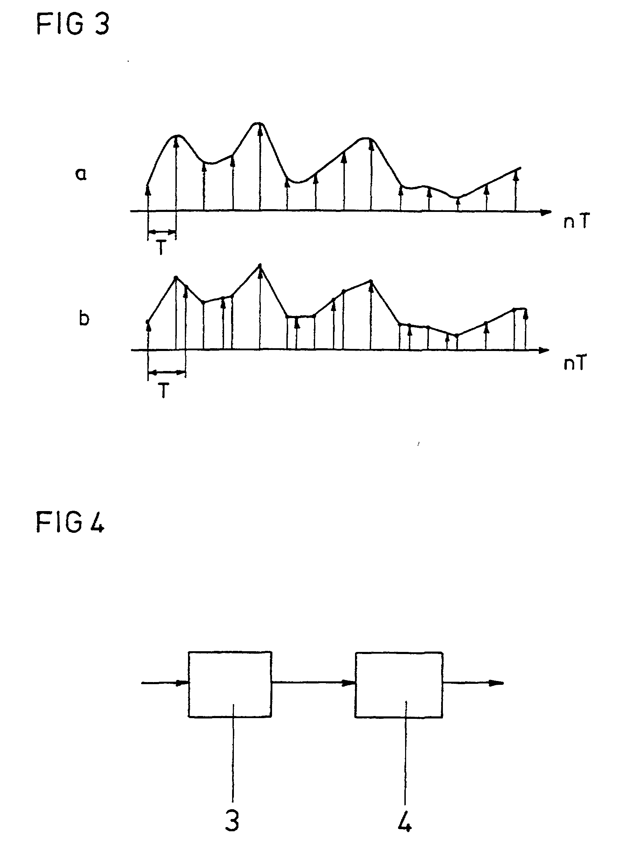

Um störende Effekte bei der Filterung zu vermeiden, wird eine obere Grenze für den Redutionsfaktor gewählt, die z.B. 1,5 oder 2 betragen kann. Der Skalierer ermöglicht dabei auch eine Verzögerung kleiner einer Abtastperiode, dh. MHS/LHS < 1, die vorteilhaft zur Kompensation des Rasterfehlers bei asynchronen Abtastrastern genutzt werden kann. Die Zeitdiagramme der Fig. 3 zeigen die Funktionsweise des zur FeinDezimation dienenden Skalierers 1. Gemäß Fig. 3a wird ein Signal mit der zeitlichen Periode T abgetastet. Aus diesen Werten können durch lineare Interpolation gemäß Fig. 3b phasenverschobene Werte ermittelt werden, wie hier durch eine Periode T* gezeigt. Der Interpolator berechnet ausgehend von einem Abtastwert und dem um eine Periode verzögerten Abtastwert auf der Basis der für jede Periode neu berechenten Phase einen neuen Abtastwert. Überschreitet der Phasenwert den Bereich einer Abtastperiode, wird der eigentlich zu berechnende Abtastwert zunächst ausgelassen, wodurch die gebrochen rationale Dezimation erreicht wird. Erst im folgenden Takt wird ein neuer Abtastwert berechnet, wobei der Phasenwert durch eine einfache Uberlaufarithmetik korrigiert wird. Eine derartige Interpolation ist dabei bei der Ermittlung unganzzahligen Dezimationen notwendig; wird eine ganzzahlige Gesamtdezimation gewählt, kann dies eventuell direkt durch MHD erreicht werden, wenn der Feindezimationsfaktor MHS/LHS = 1 gesetzt wird.

Grundsätzlich kann statt einem linearen Interpolator auch jeder andere Interpolator n-ter Ordnung für den Skalierer 1 verwendet werden.

Da das Dezimationsfilter 2 mit ganzzahliger Dezimation dem Skalierer nachgeschaltet ist, kann durch seine Tiefpaßwirkung ein möglicherweise störendes Signalspektrum nach einem nichtideal interpolierenden Skalierer reduziert werden. Weiterhin kann gemäß Fig. 2 ein Tiefpaß TP1 vor den Skalierer 1 angeordnet werden, um als Tiefpaß-Vorfilter die Sperrdämpfung zu erhöhen. Durch ein dem Dezimationsfilter 2 nachfolgendes Peaking P zur Frequenzgangversteilerung können wiederum steilere Signale erreicht werden. Das Peaking kann dabei einstellbar gehalten werden, um eine optimale Anpassung an subjektive Bildeindrücke zu ermöglichen.

Durch die Kombination des feinstufig oder stufenlos um den Feindezimationsfaktor MHS/LHS einstellbaren horizontalen Skalierers 1 und des um einen ganzzahligen Dezimationsfaktor MHD einstellbaren Dezimationsfilters 2 ist somit ein Gesamtdezimationsfaktor MH gegeben durch MH= MHD * MHS/LHS = MHD * (1+(SHS/LHS)), wobei MHD und SHS einstellbar sind. Die Pixelanzahl PD nach der Dezimation ergibt sich dann aus den abgetasteten Pixeln PS zu PD = PS/MH.

Durch eine geeignete Kombination der Faktoren für die beiden Dezimationen läßt sich ein großer Bereich von Dezimationsfaktoren einstellen. So ist durch die Wahl von 2,3,4,6 und 8 als mögliche Werte für MHD und einem Feindezimationsfaktor im dem Bereich von 1 bis 1,5 ein lückenloser Bereich des Gesamtdezimationsfaktors von 2 bis 12 einstellbar.

Für sehr große einstellbare Reduktionsfaktoren empfiehlt sich der Einsatz von mehrstufigen Dezimationsfiltern, die mit mehreren Redutionsfaktoren arbeiten. Für den Frequenzgang des auf optimale Bildqualität ausgerichteten Dezimationsfilters bedeutet die Skalierung eine Änderung der Frequenzachse,wobei die Form des Frequenzgangs des Dezimationsfilters nahezu beibehalten wird, aber die Bandgrenze sich immer weiter in Richtung der Frequenz 0 bewegt. Dadurch wird die angestrebte Bildgrößenänderung fast ohne Verlust an Bildqualität erreicht.

Die vertikale Dezimationsstufe kann grundsätzlich gemäß Fig.4 entsprechend der horizontalen Dezimationsstufe aufgebaut sein. Unterschiede können sich aus der Wirkungsweise vertikaler Filter ergeben, die statt Verzögerungen um Abtastperioden Verzögerungen um eine Bildzeile erfordern.

Bei einer Zeilenverzögerung in einer Zeilenverzögerungseinrichtung Z1 werden die Pixel einer Bildzeile gespeichert und zu Beginn der nächsten Bildzeile sequentiell zur Verfügung gestellt. Der vertikale Skalierer 3 berechnet aus der aktuellen und mindestens einer verzögerten Bildzeile eine neue Bildzeile. Der Phasenwert wird genau einmal pro Zeile zu Beginn neu berechnet. Wenn aus dem berechneten Phasenwert folgt, daß die verzögerte Zeile nicht zur neuen Zeile beiträgt, wird die Ausgabe dieser Zeile unterdrückt. Auf diese Weise wird die gebrochen rationale Dezimation in vertikaler Richtung erreicht.

Die Qualität des vertikalen Dezimationsfilters 4 wird vorrangig durch die Anzahl der zur Verfügung stehenden Zeilenverzögerung in einer Zeilenverzögerungseinrichtung Z2 begrenzt. Üblicherweise werden bei nur einer vorhandenen Zeilenverzögerung einfach aufeinanderfolgende Zeilen akkumuliert. Die vertikale Dezimationsstufe kann auch mehrere Zeilenverzögerungen vornehmen. Gemäß Fig. 4 besitzt auch das vertikale Dezimationsfilter 4 Tiefpaßwirkung. Der vertikale Gesamtdezimationsfaktor ergibt sich als MV= MVD * MVS/LVS = MVD * (1+(SVS/LVS)), wobei MVD und SVS einstellbar sind. Die Zeilenanzahl LD nach der Dezimation ergibt sich dann aus den abgetasteten Pixeln LS zu LD=LS/MV.

Somit kann eine unabhängige Steuerung der vertikalen und horizontalen Dezimation einfach und mit niedrigem Hardwareaufwand realisiert werden. Sowohl die horizontale als auch die vertikale Dezimation kann mit unganzzahligen Werten stufenlos oder feinstufig erfolgen. Die Feinstufigkeit der Skalierung ist eventuell nur durch das Auflösungsvermögen in ganzen Pixeln und Zeilen begrenzt. Mit den Tiefpässen und gegebenenfalls einem Peaking kann eine optimale Filterung und somit eine hohe Bildqualität erreicht werden. Die erfindungsgemäße Lösung kann auch bei bestehenden Dezimatiosfilten durch Hinzufügen bzw Vorschalten des bzw der Skalierer verwirklicht werden.

## Patentansprüche

1. Verfahren zur Bildgrößenänderung von Videobildern,
wobei eine Dezimation von Videobildsignalen (V) um einen ganzzahligen Dezimationsfaktor (MHD, MVD) durchgeführt wird, und
wobei zusätzlich eine Feindezimation der Videobildsignale (V) um einen auf unganzzahlige Werte einstellbaren Feindezimationsfaktor (SHS, SVS) durchgeführt und ein für die Dezimation der Videobildsignale (V) relevanter Gesamtdezimationsfaktor (MH, MV) aus dem ganzzahligen Dezimationsfaktor (MHD, MVD) und dem Feindezimationsfaktor (SHS, SVS) gebildet wird,
**dadurch gekennzeichnet,**
**daß** zuerst die Feindezimation der Videobildsignale (V) um den unganzzahligen Feindezimationsfaktor (SHS, SVS) und nachfolgend die Dezimation um den ganzzahligen Dezimationsfaktor (MHD, MVD) durchgeführt wird.

2. Verfahren nach Anspruch 1,
**dadurch gekennzeichnet,**
**daß** für einen vorgegebenen Gesamtdezimationsfaktor (MH, MV) ein ganzzahliger Dezimationsfaktor (MHD, MVD) und ein Feindezimationsfaktor (SHS, SVS) ermittelt werden, deren Produkt den Gesamtdezimationsfaktor ergibt.

3. Verfahren nach Anspruch 1 oder 2,
**dadurch gekennzeichnet,**
**daß** der ganzzahlige Dezimationsfaktor (MHD, MVD) und der Feindezimationsfaktor (SHS, SVS) derartig einstellbar sind, daß ein mehrere ganzzahlige Werte umfassender Bereich von Gesamtdezimationsfaktoren (MH, MV) einstellbar ist.

4. Verfahren nach einem der Ansprüche 1 bis 3,
**dadurch gekennzeichnet,**
**daß** für den ganzzahligen Dezimationsfaktor (MHD, MVD) die Werte 2,3,4,6,8 einstellbar sind.

5. Verfahren nach einem der Ansprüche 1 bis 4,
**dadurch gekennzeichnet,**
**daß** für den Feindezimationsfaktor (SVS, SHS) Werte in einem Bereich von 1 bis 1,5 oder 1 bis 2 einstellbar sind.

6. Verfahren nach einem der Ansprüche 1 bis 5,
**dadurch gekennzeichnet,**
**daß** während und/oder vor der ganzzahligen Dezimation eine Tiefpaßfilterung vorgenommen wird.

7. Verfahren nach einem der Ansprüche 1 bis 6,
**dadurch gekennzeichnet,**
**daß** die Feindezimation eine lineare Interpolation von Videobildsignalen umfaßt.

8. Verfahren nach einem der Ansprüche 1 bis 7,
**dadurch gekennzeichnet,**
**daß** vor der Feindezimation eine Tiefpaßfilterung (TP1) durchgeführt wird.

9. Verfahren nach einem der Ansprüche 1 bis 8,
**dadurch gekennzeichnet,**
**daß** nach der ganzzahligen Dezimation eine Frequenzgangversteilerung (P) durchgeführt wird.

10. Verfahren nach einem der Ansprüche 1 bis 9,
**dadurch gekennzeichnet,**
**daß** eine horizontale Dezimation der Videobildsignale durchgeführt wird.

11. Verfahren nach einem der Ansprüche 1 bis 10, **dadurch gekennzeichnet,**
**daß** eine vertikale Dezimation der Videobildsignale durchgeführt wird.

12. Verfahren nach Anspruch 11,
**dadurch gekennzeichnet,**
**daß** zuerst die horizontale und nachfolgend die vertikale Dezimation durchgeführt wird.

13. Vorrichtung zur Durchführung eines Verfahrens nach einem der Ansprüche 1 bis 12,
mit einem Dezimationsfilter (2; 4) zur Durchführung einer Dezimation von Videobildsignalen (V) um einen ganzzahligen Dezimationsfaktor (MHD, MVD), und
mit einem Skalierer (1; 3) zur zusätzlichen Durchführung einer Feindezimation der Videobildsignale (V) um einen auf ungeradzahlige Werte einstellbaren Feindezimationsfaktor (SHS, SVS), so daß ein für die Dezimation der Videobildsignale (v) relevanter Gesamtdezimationsfaktor (MH, MV) aus dem ganzzahligen Dezimationsfaktor (MHD, MVD) und dem Feindezimationsfaktor (SHS, SVS) gebildet ist,
**dadurch gekennzeichnet,**
**daß** das Dezimationsfilter (2; 4) für die Dezimation um den ganzzahligen Dezimationsfaktor (MHD, MVD) dem Skalierer (1; 3) für die Feindezimation um den unganzzahligen Feindezimationsfaktor (SHS, SVS) nachgeschaltet ist.

14. Vorrichtung nach Anspruch 13,
**gekennzeichnet durch**
eine Steuereinrichtung (6) zum Ausgeben des ganzzahligen Dezimationsfaktors (MHD, MVD) und des unganzzahligen Feindezimationsfaktors (SHS, SVS).

## Claims

1. Method for changing the image size of video images, decimation of video image signals (V) being carried out by an integral decimation factor (MHD, MVD), and a fine decimation of the video image signals (V) additionally being carried out by a fine decimation factor (SHS, SVS) which can be adjusted to non-integral values, and a total decimation factor (MH, MV) relevant to the decimation of the video image signals (V) being formed from the integral decimation factor (MHD, MVD) and the fine decimation factor (SHS, SVS), **characterized in that** firstly the fine decimation of the video image signals (V) by the non-integral fine decimation factor (SHS, SVS), and subsequently the decimation by the integral decimation factor (MHD, MVD) are carried out.

2. Method according to Claim 1, **characterized in that** an integral decimation factor (MHD, MVD) and a fine decimation factor (SHS, SVS) whose product yields the total decimation factor are determined for a prescribed total decimation factor (MH, MV).

3. Method according to Claim 1 or 2, **characterized in that** the integral decimation factor (MHD, MVD) and the fine decimation factor (SHS, SVS) can be adjusted in such a way that a range of total decimation factors (MH, MV) comprising several integral values can be set.

4. Method according to one of Claims 1 to 3, **characterized in that** the values 2, 3, 4, 6, 8 can be adjusted for the integral decimation factor (MHD, MVD).

5. Method according to one of Claims 1 to 4, **characterized in that** values in a range of 1 to 1.5 or 1 to 2 can be adjusted for the fine decimation factor (SVS, SHS).

6. Method according to one of Claims 1 to 5, **characterized in that** low-pass filtering is undertaken during and/or before the integral decimation.

7. Method according to one of Claims 1 to 6, **characterized in that** the fine decimation comprises a linear interpolation of video image signals.

8. Method according to one of Claims 1 to 7, **characterized in that** low-pass filtering (TP1) is carried out before the fine decimation.

9. Method according to one of Claims 1 to 8, **characterized in that** frequency response crispening (P) is carried out after the integral decimation.

10. Method according to one of Claims 1 to 9, **characterized in that** horizontal decimation of the video image signals is carried out.

11. Method according to one of Claims 1 to 10, **characterized in that** vertical decimation of the video image signals is carried out.

12. Method according to Claim 11, **characterized in that** firstly horizontal, and subsequently vertical decimation are carried out.

13. Device for carrying out a method according to one of Claims 1 to 12, having a decimation filter (2; 4) for carrying out decimation of video image signals (V) by an integral decimation factor (MHD, MVD), and having a scaler (1; 3) for additionally carrying out fine decimation of the video image signals (V) by a fine decimation factor (SHS, SVS) which can be adjusted to non-integral values, such that a total decimation factor (MH, MV) relevant to the decimation of the video image signals (V) is formed from the integral decimation factor (MHD, MVD) and the fine decimation factor (SHS, SVS), **characterized in that** the decimation filter (2; 4) for decimation by the integral decimation factor (MHD, MVD) is connected downstream of the scaler (1; 3) for fine decimation by the non-integral fine decimation factor (SHS, SVS).

14. Device according to Claim 13, **characterized by** a control device (6) for outputting the integral decimation factor (MHD, MVD) and the non-integral fine decimation factor (SHS, SVS).

## Revendications

1. Procédé de modification du format des images vidéos en effectuant une décimation des signaux vidéos (V) par un facteur de décimation entier (MHD, MVD) et en effectuant, en plus, une décimation fine des signaux vidéos (V) par un facteur de décimation fine réglable sur des valeurs fractionnaires (SHS, SVS) et en formant à partir du facteur de décimation entier (MHD, MVD) et du facteur de décimation fine (SHS, SVS) un facteur de décimation global déterminant pour la décimation des signaux vidéos (V), **caractérisé en ce que** l'on effectue d'abord la décimation fine des signaux vidéos (V) par le facteur de décimation fine fractionnaire (SHS, SVS) et ensuite la décimation par le facteur de décimation entier (MHD, MVD).

2. Procédé selon la revendication 1, **caractérisé en ce que**, pour un facteur de décimation global (MH, MV) prédéfini, on détermine un facteur de décimation entier (MHD, MVD) et un facteur de décimation fine (SHS, SVS), dont le produit donne le facteur de décimation global.

3. Procédé selon la revendication 1 ou 2, **caractérisé en ce que** le facteur de décimation entier (MHS, MVS) et le facteur de décimation fine (SHS, SVS) sont réglables de manière à pouvoir définir une plage de facteurs de décimation globaux (MH, MV) contenant plusieurs valeurs entières.

4. Procédé selon l'une quelconque des revendications 1 à 3, **caractérisé en ce que** 1es valeurs 2, 3, 4, 6, 8 peuvent être définies pour le facteur de décimation entier (MHD, MVD).

5. Procédé selon l'une quelconque des revendications 1 à 4, **caractérisé en ce que** des valeurs pour le facteur de décimation fine (SVS, SHS) peuvent être définies à l'intérieur d'une plage allant de 1 à 1,5 ou de 1 à 2.

6. Procédé selon l'une quelconque des revendications à 5, **caractérisé en ce qu'**un filtrage passe-bas est effectué pendant et/ou avant la décimation par un facteur entier.

7. Selon l'une quelconque des revendications 1 à 6, **caractérisé en ce que** la décimation fine comporte une interpolation linéaire des signaux vidéos.

8. Procédé selon l'une quelconque des revendications 1 à 7, **caractérisé en ce qu'**un filtrage passe-bas (ZP1) est effectué avant la décimation fine.

9. Procédé selon l'une quelconque des revendications 1 à 8, **caractérisé en ce qu'**un redressement de la pente de la réponse fréquentielle (P) est effectué après la décimation par un facteur entier.

10. Procédé selon l'une quelconque des revendications 1 à 9, **caractérisé en ce qu'**il est effectué une décimation horizontale des signaux vidéos.

11. Procédé selon l'une quelconque des revendications 1 à 10, **caractérisé en ce qu'**il est effectué une décimation verticale des signaux vidéos.

12. Procédé selon la revendication 11, **caractérisé en ce que** l'on effectue en premier lieu la décimation horizontale et ensuite la décimation verticale.

13. Dispositif destiné à la mise en oeuvre d'un procédé selon l'une quelconque des revendications 1 à 12, comprenant un filtre de décimation (2 ; 4) destiné à effectuer une décimation des signaux vidéos (V) par un facteur de décimation entier (MHD, MVD), et un dispositif de réduction (1 ; 3) destiné à effectuer, en plus, une décimation fine des signaux vidéos (V) par un facteur de décimation fine (SHS, SVS) pouvant être réglé sur des valeurs fractionnaires, de telle sorte qu'un facteur de décimation global déterminant pour la décimation des signaux vidéos (V) puisse être formé à partir du facteur de décimation entier (MHD, MVD) et du facteur de décimation fine (SHS, SVS), **caractérisé en ce que** le filtre de décimation (2 ; 4) pour la décimation par un facteur entier (MHD, MVD) est monté en aval du dispositif de réduction (1 ; 3) pour la décimation fine par un facteur de décimation fine fractionnaire (SHS, SVS).

14. Dispositif selon la revendication 13, **caractérisé par** une unité de commande (6) destinée à éditer le facteur de décimation entier (MHD, MVD) et le facteur de décimation fine fractionnaire (SHS, SVS).
